# EUROPEAN PATENT SPECIFICATION

(11) **EP 2 124 525 B1**
(45) Date of publication and mention of the grant of the patent: **23.08.2017**
(21) Application number: 08741737.4
(22) Date of filing: 06.03.2008
(51) Int. Cl.: A01K 1/01, E03F 5/00, A01C 3/02, E04H 5/08

(54) **ANIMAL MANAGEMENT AND ANIMAL WASTE MANAGEMENT FACILITY**
EINRICHTUNG FÜR DIE HANDHABUNG VON TIEREN UND TIERABFALL
INSTALLATION DE GESTION D'ANIMAUX ET DE GESTION DES DÉCHETS ANIMAUX

(30) Priority: 08.03.2007 NZ 55376107; 30.04.2007 NZ 55490107
(43) Date of publication of application: 02.12.2009
(73) Proprietor: Herd Homes Limited, Whangarei 0171 (NZ)
(72) Inventor: POW, Thomas George, Whangarei 0171 (NZ)
(74) Representative: Kelly, Donal Morgan
(86) International application number: PCT/NZ2008/000044
(87) International publication number: WO 2008/108669

(56) References cited:
- WO-A1-2004/022883
- WO-A1-2006/058537
- WO-A2-2005/033010
- DE-U1- 20 007 702
- DE-U1- 20 007 702
- GB-A- 1 320 293
- GB-A- 1 320 293
- GB-A- 1 509 337
- US-A- 4 175 515
- US-A1- 2003 066 789
- US-B1- 6 207 057
- US-B1- 6 207 057

## Description

### Field of Invention

The present invention relates in an animal management and animal waste management facility.

### Background

Pugging and compaction damage of grazing pasture can occur by grazing animals, or farm vehicles and machinery. This can occur when the soil is soft such as when it is wet and the weight of the animals or vehicles cannot be adequately supported by the soil's surface. Pugging can result in poor drainage, keeping the soil soft and wet. Pugging and compaction damage can also result in reduced pasture utilisation as well as a reduction in future pasture yield, depending upon the soil type. Pugging also allows weeds and poor species of grasses to become established. Moreover, pugging and compaction damage requires more tractor passes for seed bed preparation and sowing and greater fertiliser and topsoil requirements. However, it may not always be possible to add the necessary increased fertiliser requirement due to some region's/country's regulations regarding runoff of nitrogen into the waterways.

In order to address the problem of runoff, and/or pugging and/or compaction damage of grazing pastures, stand-off pads are often used. Stand-off pads are generally purpose-built, loafing or standing spaces where stock can be held for long periods when it is not suitable to have them on pasture. This may occur for example during a wet season, inclement weather, or when it is otherwise undesirable to have cattle or other livestock on pasture.

Some presently available stand-off pads are usually constructed of wood/wood chips, metal/lime, or concrete. One disadvantage associated with such stand-off pads is in relation to drainage. That is, many pads often have poor drainage or simply allow the effluent to be washed off and into oxidation ponds, or directly into waterways. It is now well known that effluent run-off into waterways is environmentally damaging.

Furthermore, it is found that there are usually problems associated with standing livestock such as cows on presently available concrete pads (predominantly lameness) and wood chip pads (predominantly mastitis). The effectiveness of wood chip pads is generally found to be dependent upon good management and regular maintenance, involving regularly stripping the old surface and replacing it with new wood chips. This can be both time and cost intensive.

WO2004/022883 addresses some of these issues regarding common stand-off pad constructions. WO2004/022883 describes a covered stand-off pad that includes a slatted concrete floor that allows for effluent to pass therethrough and into a basement area.

This allows waste matter to be separated from the floor and to be collected in the basement. This has several advantages including that the floor does not need to be hosed down as excess waste matter tends not to build up on the floor.

Also, it has been found that upon contact with the air, a film or skin is formed over the waste material within the basement in much the same way as a skin forms quickly over a "cow pat". This skin or film serves to block odours and/or harmful gases emanating from the waste material from being released into the surroundings of the stand-off pad. The skin or film is believed to be a protein which forms upon contact with oxygen of components within the waste matter and while blocking gases and odours still allows the evaporation of moisture therethrough. As some of the constituents of waste matter can be useful as fertiliser, whereas liquid urine is not a desirable constituent due to environmental pollution problems, evaporation of liquid is desirable in order to allow a processing of the waste before it is used as a fertiliser.

Whilst in use it has been found that above a certain combination of environmental conditions, primarily temperature and/or humidity and/or airflow within the basement area, sufficient evaporation in the basement area to actively reduce the volume of liquid in the waste matter may occur. A net reduction in liquid can hence result.

Whilst in-use it has been found that below a certain combination of environmental conditions, primarily temperature and/or humidity and airflow within the basement area, sufficient evaporation in the basement area to actively reduce the volume of liquid in the waste matter may not occur. A net gain in liquid can result.

The basement acts as a storage facility when this occurs. When for example the temperature increases during the warmer months of the year, evaporation from the waste matter within the basement area can start to occur. It has been found that the invention of WO2004/022883 can produce in the basement area, an environment with sufficient ambient air derived warmth and air flow (for example through the drainage means or through gaps between modular floor components) which encourages evaporation of moisture from the stored waste material. Although it is desirable for such effects to occur even on less warm days in order to increase processing rate of the waste matter.

Another feature of the invention described in WO2004/022883 is that the substantially waterproof cover, combined with the open side walls, serves to keep the floor as well as the basement relatively dry and ventilated. This is important given that it allows for dry waste matter to form on the slatted concrete floor of the standoff pad. This deposit or film serves as an insulator and/or softener between the hoof or foot of the animal and the concrete pad.

However, we have found that the invention described in WO2004/022883 does not always (or consistently) result in an effective drying and ventilation of the area enclosed by the standoff pad during all types of weather. For example, we discovered that portions of the shelter that were often in a wind shadow (or that were subjected to inconsistent wind flow) were not subjected to any or significant or consistent drying or ventilating effect.

The invention of WO2004/022883 describes a roof that can help keep precipitation out and increase the temperature inside the structure for the purposes of aiding drying of waste matter on the floor and in the basement. However during certain times of the day it may be undesirable for animals to be located under the roof. In particular certain animals are quite sensitive to environmental conditions. In particular body temperature and heat exchange factors can have an influence on for example milk productivity of animals. Prolonged stand-off periods during hot weather can adversely affect an animal's productivity, particularly under a covered stand-off facility where air circulation may reduce heat exchange. Accordingly the invention described in WO2004/022883 has some further limitations. GB 1 509 337 A of Nolos Ltd relates to an animal shelter where effluent can be collected in a basement beneath the floor of a shelter. The effluent collecting portion of the basement is partitioned from the remainder of the basement by a honeycomb wall, such that the liquid content of the effluent is permitted to seep through the honeycomb wall and drain away to a holding tank, while the remaining effluent is retained in the basement.

It is accordingly an object of the present invention to provide an animal management and animal waste management facility to address the abovementioned advantages and/or to at least provide the public with a useful choice.

It may also be an object of the present to provide an animal waste management facility that allows the collection and separation of solid and liquid waste from animals to allow for these different types of waste product to be handled appropriately.

### Brief description of the invention

Accordingly the present invention according to claim 1 consists in an animal management facility.

Preferably there are a plurality of intermediate storage reservoirs between at least one and preferably each animal shelter and said common liquid storage reservoir.

Preferably the drainage of liquid waste from said animal shelter to its respective conduit is as a result of hydraulic pressure (and preferably not due to sloping of the catchments region of the shelter).

Preferably each shelter is located on one of the sides of a central path that extends between said plurality of shelters.

Preferably said common liquid storage reservoir is positioned at one end of the path.

Preferably said common liquid storage reservoir is positioned not intermediate of any two shelter structures.

Preferably the common liquid storage reservoir is positioned at a location to allow a collection vehicle to collect the liquid therein without the vehicle needing to drive between two or more shelter structures.

Preferably the or each liquid storage reservoir includes a float cover to extend across the upper surface of waste matter in said reservoir to reduce evaporation of waste into the atmosphere.

Preferably said float is a solid cover.

Preferably said float is a liquid cover. The animal shelter structure comprises
(a) a floor to support animals, said floor including apertures therethrough allowing animal waste matter to pass through the floor,
(b) a basement below said floor for collecting said waste matter,
(c) floor supports to support said floor above said basement, and
(d) side supports.
There is also a water impervious canopy supported by said side supports, said canopy being supported above at least part of said floor, said canopy allowing at least some light to pass therethrough,
at least one air flow control means to control airflow in the area below said canopy. An animal shelter structure is described with reference to our PCT application PCTNZ2003/000195. Another animal shelter structure is described with reference to our PCT application PCT/NZ2006/000324. Another animal waste management facility comprises:
a plurality of animal shelter structures each structure including
a canopy above a floor that includes a plurality of openings to allow waste produced by animals standing on said floor to pass through the floor and into a basement below said floor, wherein said basement includes a fluid outlet to allow a draining of fluid received in said basement to pass through said opening and into a buffer reservoir, and
a main reservoir that is in fluid connection with the buffer reservoir of each animal shelter structure to receive fluid from each said buffer reservoir.

Preferably said fluid connection is a valved connection allowing control of the receipt of fluid by said main reservoir.

Preferably the inlet for fluid into said main reservoir is at or near the bottom of said reservoir.

Preferably the main reservoir includes an outlet conduit via which fluid can be drawn out of said main reservoir.

Preferably said outlet conduit makes a fluid connection with said main reservoir at or near the bottom of said reservoir.

Preferably the main reservoir includes a fluid cover that floats on top of said fluid and reduces any evaporation of fluid from the body of fluid contained.

Preferably the fluid is a liquid.

Preferably the fluid may include a gas that is entrained in said liquid.

In a further aspect there is provided a method of reducing the adverse environmental impact of animal farming comprising:
providing a plurality of animal shelter structures each structure including;
a canopy above a floor that includes a plurality of openings to allow waste produced by animals standing on said floor to pass through the floor and into a basement below said floor, wherein said basement includes a fluid outlet to allow a draining of fluid received in said basement to pass through said opening and into a buffer reservoir, and
allowing a transfer of fluid from each buffer reservoir of each animal shelter structure to a common main reservoir, wherein the main reservoir includes a cover to float on top of said fluid in said main reservoir to reduce any evaporation of fluid from the body of fluid contained in said main reservoir.

Preferably said draining is by way of hydrostatic forces.

Preferably said transfer is by way of hydrostatic forces.

Preferably said transfer includes the use of a pump. The present invention according to claim 8 consists in a method of separating the liquid waste from solid waste of waste produced by a farm animal, said method comprising:
providing an animal shelter structure that comprises a canopy above a floor that includes a plurality of openings to allow waste produced by animals standing on said floor to pass through the floor and into a basement below said floor, wherein said basement includes a fluid outlet to allow a draining of fluid received in said basement to pass through said opening and into a reservoir, and
allowing draining of at least some of said liquid from said basement and into said reservoir prior to removing the remaining waste from the basement.

In a further aspect there is provided an animal shelter structure that comprises
a canopy above a floor that includes a plurality of openings to allow waste produced by animals standing on said floor to pass through the floor and into a basement below said floor, wherein said basement includes a fluid outlet to allow a draining of fluid received in said basement to pass through said opening and into a reservoir.

Preferably said outlet allows a draining of fluid to a said reservoir that also received fluid from other said animal shelter structures.

In a further aspect there is provided a plurality of animal shelter structures each positioned adjacent to another, wherein each animal shelter includes a liquid waste conduit in fluid connection with said animal shelter to, at least through hydraulic displacement, allow the ducting of liquid waste from the animal shelter to a liquid waste storage reservoir. Each animal shelter structure comprises
(a) a floor to support animals, said floor including apertures therethrough allowing animal waste matter to pass through the floor,
(b) a basement below said floor for collecting said waste matter,
(c) floor supports to support said floor above said basement, and
(d) side supports.

This invention may also be said broadly to consist in the parts, elements and features referred to or indicated in the specification of the application, individually or collectively, and any or all combinations of any two or more of said parts, elements or features, and where specific integers are mentioned herein which have known equivalents in the art to which this invention relates, such known equivalents are deemed to be incorporated herein as if individually set forth.

As used herein the term "and/or" means "and" or "or", or both.

As used herein "(s)" following a noun means the plural and/or singular forms of the noun.

The term "comprising" as used in this specification means "consisting at least in part of". When interpreting statements in this specification which include that term, the features, prefaced by that term in each statement, all need to be present but other features can also be present. Related terms such as "comprise" and "comprised" are to be interpreted in the same manner.

It is intended that reference to a range of numbers disclosed herein (for example, 1 to 10) also incorporates reference to all rational numbers within that range (for example, 1, 1.1, 2, 3, 3.9, 4, 5, 6, 6.5, 7, 8, 9 and 10) and also any range of rational numbers within that range (for example, 2 to 8, 1.5 to 5.5 and 3.1 to 4.7) and, therefore, all sub-ranges of all ranges expressly disclosed herein are hereby expressly disclosed. These are only examples of what is specifically intended and all possible combinations of numerical values between the lowest value and the highest value enumerated are to be considered to be expressly stated in this application in a similar manner.

In this specification where reference has been made to patent specifications, other external documents, or other sources of information, this is generally for the purpose of providing a context for discussing the features of the invention. Unless specifically stated otherwise, reference to such external documents is not to be construed as an admission that such documents, or such sources of information, in any jurisdiction, are prior art, or form part of the common general knowledge in the art.

### Brief description of the drawings

The invention will now be described with reference to the accompanying drawings in which:
Figure 1 is a plan view of an animal management facility illustrating a plurality of shelter structures, a milking shed, and a liquid waste collection reservoir,
Figure 2 is a side and partial sectional view of two animal shelter structures and a liquid waste collection reservoir,
Figure 3 is a variation to the embodiment shown in Figure 2.
The terms "waste matter" is understood to include cattle or livestock effluent such as faeces and urine, as well as other waste such as food waste and the like,
Figure 4 is a plan view of the layout of a waste management system for an animal management facility illustrating a network of animal shelter basements, collection points and a liquid waste collection reservoir,
Figure 5 is a section view of the layout shown in Figure 4, and
Figure 6 is a close up view of the collection reservoir.

### Detailed description of the invention

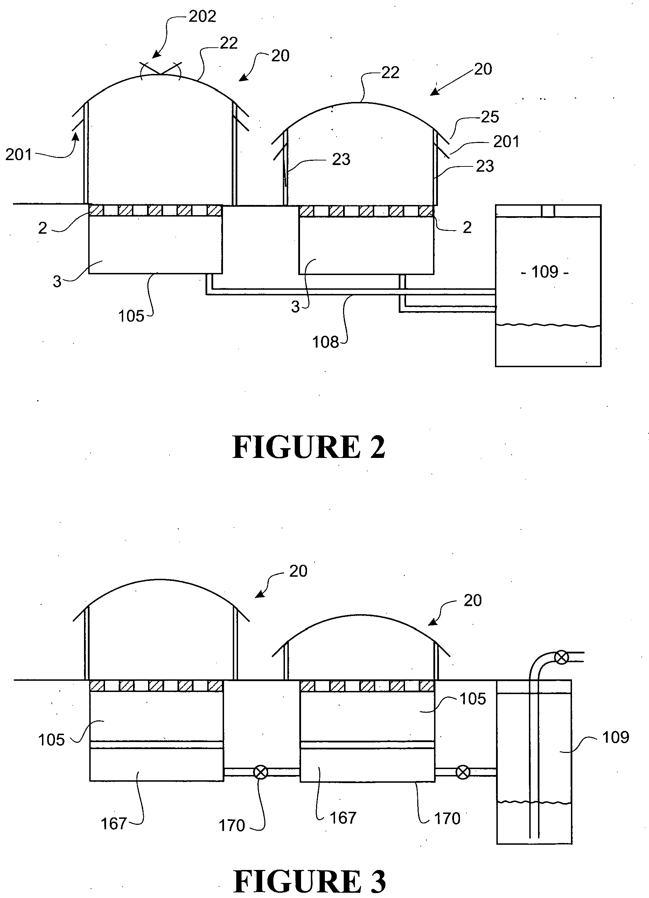

In Figure 2, there is shown two shelter structures 20. Each structure 20 is preferably a four side structure that includes a canopy 22 covering a covered space. The structure is an open sided structure having at least one and preferably all of its four sides at least partially open. The structure 20 has a curved and closed canopy 22, supported by and above side supports 23 such as posts or props. Vent openings 202 are provided through the canopy. These are closable.

Each structure is provided with louvre boards 201 that are provided to assist in modifying the environment within the covered space. The louvre boards 201 are preferably provided along at least two opposed sides of the structure. A louvre board may extend along at least two opposing or all sides of the structure 20. Where the structure 20 is rectangular in plan shape the louvre boards are preferably located at the major opposing sides of the structure. The louvre boards 201 are preferably situated below the lower edges of the canopy 22. There is thus an airspace, between the louvre boards and the lower edges of the canopy 22.

The louvre boards are downwardly and outwardly extending from the lower edge 25 of the canopy 22. They are preferably angled at approximately 45 degrees with respect to the side supports 23 and extend generally the length of the sides of the structure 20. One or more louvre boards end on end may be used. One or more at least partially overlapping louvre boards may also be used.

The structure 20 includes a floor 2 for animals to stand on. The floor 2 is a slatted floor to allow animal waste matter to pass therethrough. Each structure 20 also includes a basement 3 below the floor 2 for collecting waste matter. The basement 3 may include a floor 105.

Side supports 23 preferably in the form of posts are provided for supporting the canopy 22 above the floor 2. There are preferably no side walls to the structure.

The canopy 22 preferably includes a support structure and a translucent plastics cladding material. The cladding material is waterproof and allows light to pass therethrough. Light passing through the canopy 22 can contribute to establishing a desirable environment within the covered space.

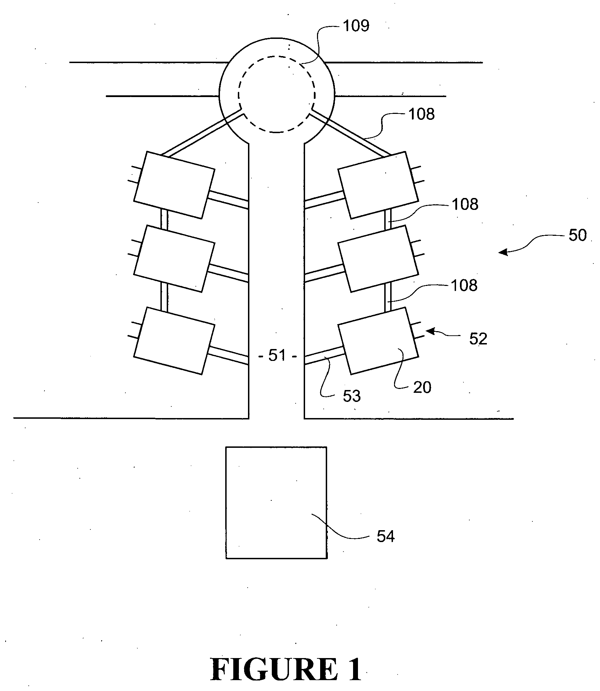

In Figure 1 there is shown a facility 50 that consists of two rows of structures 20 a row positioned on each side of a central path or road 51. Each structure may include an inlet passage 52 to allow for animals to walk into the structure and an exit passage 53 to allow the animals to exit the structure and move onto the path 51. The passages 52 and 53 may alternatively be used for both inlet and outlet of animals from the structure or one of inlet and outlet. A single milking facility 54 may be provided to service the animals that may be temporarily housed in each of the structures 20. The milking shed 54 is preferably located sufficiently far enough from the proximate most shelter structure 20 to prevent or reduce the risk of cross contamination of animal waste at the animal shelter structures, with parts of the milking shed 54.

Each basement is a collection reservoir for animal waste that falls directly from animals standing on the floor and that passes through the openings in the floor and into the basement. With reference to our Figure 2, it can be seen that each basement 3 has a conduit 108 associated therewith. This can allow for ducting of liquid waste from the basement to a collection reservoir 109. Each shelter has a designated conduit 108 to allow for independent ducting of liquid waste from the shelter to the common collection reservoir 109. Alternatively a series of conduits may be provided between adjacent shelter structures to allow for the passage of liquid from structure to structure and to or towards the collection reservoir 109 as shown in Figure 3.

Liquid waste is collected in the common collection reservoir 109 which is preferably located at one end of the facility. Preferably the collection reservoir 109 is located at one end of the facility so as to allow for a collection vehicle to remove the collected liquid in the collection reservoir 109 without having to drive through the facility. This can assist with preventing facility from getting contaminated by outside contaminants. In the preferred form the collection reservoir 109 of the facility, is that component of the facility that is furthermost from the milk shed 54, as shown for example in Figure 1.

With reference to Figure 3, it can be seen that for each shelter structure 20 a designated collection reservoir 167 may be provided. Each designated collection reservoir 167 may be connected in series with adjacent reservoirs by ducting or conduits and are thereby also connected to the common collection reservoir 109.

Valves 170 may be located in the arrangements to control the displacement of liquid in the facility. The valves may be remotely controlled. Liquid waste level sensors in the common collection reservoir 109 and in any of the designated collection reservoirs 176 may also be provided and a display thereof may be provided in a remote location. With an arrangement of an animal management and animal waste management facility as herein described, efficient collection and management of animal waste can be achieved. Efficient separation of liquid and solid animal waste can also be established.

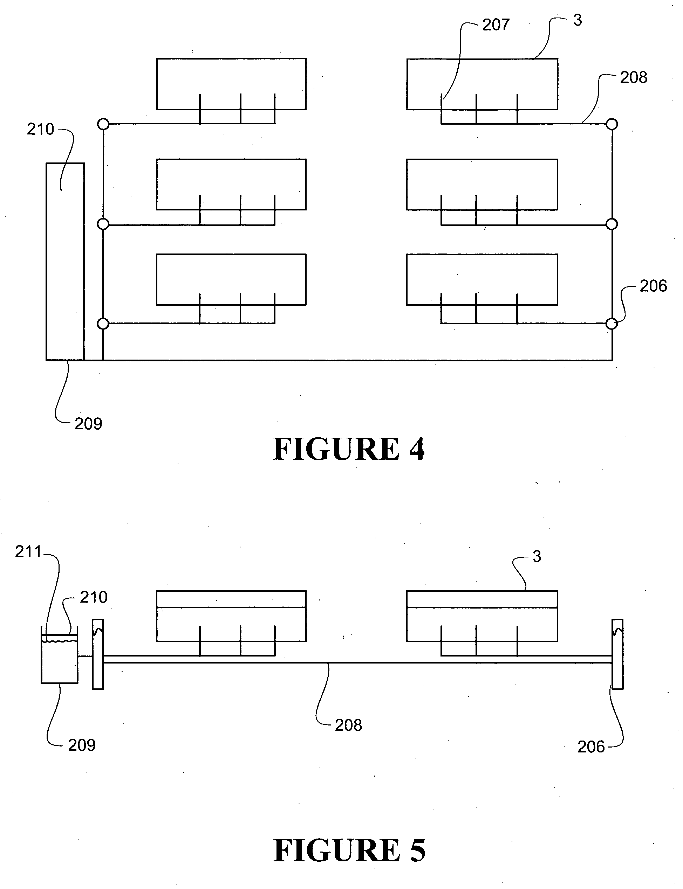

Figure 4 shows the layout of a possible waste management system for an animal management facility. There is shown a network of basements 3 of shelter structures 20 which may have multiple exit conduits 207 connected to a main conduit 208. The exit conduits 207 allow for waste matter to be removed from the basement 3 and be transported through the conduit 208 running there from and operatively connected to collection points 206. Preferably there is a collection point 206 for each basement 3 and the collection points 206 are connected to adjacent collection points 206 by a main conduit 208.

Valves may be located between the basements 3 and collection points 206 to control the displacement of liquid in the facility. The valves may be remotely controlled. Preferably the valves are controlled such that timing and/or volume of flow is optimized based on the amount of liquid to be transported through the facility. A float may control the valves and thus the displacement of liquid from each basement 3 based on the volume of liquid present in that basement 3.

With reference to Figure 5, waste matter may be transported through main conduits 208 from each collection point 206 to a common collection reservoir 209. The main conduits may have rising or falling gradients, but are self levelling so pumps are not mandatory.

Valves may be located between the collection points 206 in the network to control the displacement of liquid between each collection point 206 and to the common collection reservoir 209. A float may control the valves and thus the displacement of liquid from each collection point 206 based on the volume of liquid present in that collection point 206.

The reservoir 209 may have a floating cover 210 to reduce evaporation of the waste matter. The floating cover preferably extends over the entire reservoir 209 so that the top surface 211 of the waste matter is completely enclosed from the atmosphere. The floating cover 210 may be in the form of a solid cover which floats on the top surface 211 of the waste matter in the reservoir 209. Alternatively, the floating cover 210 may be in the form of a liquid film that has a lower density than the waste matter below. For example, the floating cover 210 may be a layer of oil that floats on the top surface 211 of the waste matter to reduce evaporation of the waste matter into the atmosphere. The cover material may be some form of biomass such as straw.

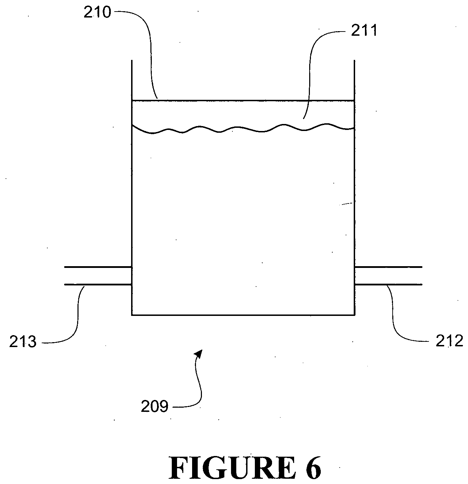

With reference to Figure 6, the reservoir 209 may be configured such that the inlet 212 and outlet 213 are located below the top surface 211 of the waste matter. Such a configuration ensures that any waste matter entering or exiting the reservoir 209 is always concealed underneath the floating cover 210 to minimise the possibility of the waste matter evaporating.

The reservoir 209 may also act as a storage facility for the waste matter and preferably the reservoir 209 has accessibility such that the waste matter can be removed by a collection vehicle. For example, the waste matter may be pumped from the reservoir through the outlet 213 to a collection vehicle.

## Claims

1. An animal management facility (50) comprising a plurality of partially open sided animal shelter structures (20), each of said animal shelter structures comprising:
a floor to support animals, the floor (2) including apertures therethrough allowing animal waste matter to pass through the floor (2),
a basement (3) below said floor (2) for collecting said waste matter, and
a water impervious, curved and closed canopy (22) supported above and over the floor (2) by side supports, wherein said canopy (22) is made of a material which allows at least some light to pass therethrough , and
wherein each said animal shelter structure (20) further comprises an air flow control means to control airflow in the area below said canopy (22), said airflow control means comprising:
a) a closable vent opening (202) through said canopy (22) and
b) one or more downwardly and outwardly extending louvre boards (201) situated below, or extending from, a lower edge of the canopy (22),
and wherein each said animal shelter structure includes a liquid waste conduit (208) in fluid connection with said basement (3) of a respective shelter structure to allow draining of liquid waste in each basement to a remotely located liquid waste storage reservoir (209) common for all of said structures, by way of hydrostatic forces.

2. An animal management facility (50) as claimed in claim 1 wherein said fluid connection is a valved connection allowing control of receipt of fluid by said liquid waste storage reservoir (209).

3. An animal management facility (50) as claimed in claim 1 or 2 wherein the inlet (212) for fluid into said liquid waste storage reservoir (209) is at or near the bottom of said reservoir.

4. An animal management facility (50) as claimed in any one of claims 1 to 3 wherein the liquid storage reservoir (209) includes an outlet conduit (213) via which fluid can be drawn out of said liquid storage reservoir.

5. An animal management facility (50) as claimed in claim 4 wherein said outlet conduit (213) makes a fluid connection with said liquid storage reservoir at or near the bottom of said reservoir.

6. An animal management facility (50) as claimed in any one of claims 1 to 5 wherein the liquid storage reservoir (209) includes a fluid cover (210) that floats on top of said fluid and reduces any evaporation of fluid from a body of fluid contained.

7. An animal management facility (50) as claimed in any one of claims 1 to 6 wherein said facility comprises at least two of said animal shelter structures (20), wherein the basement (3) of each said animal shelter structures (20) drains to a separate buffer reservoir (206), each of said buffer reservoirs being in fluid connection with said liquid waste storage reservoir (209) via said liquid waste conduit (208).

8. A method of separating liquid waste from solid waste of waste produced by a farm animal, said method comprising:
providing an animal management facility (50) as claimed in any one of the preceding claims, and
allowing draining of at least some of said liquid from said basement (3) and into said liquid storage reservoir (209) prior to removing the remaining waste from the basement (3).

## Patentansprüche

1. Tierhaltungseinrichtung (50), die mehrere Tierunterstandskonstruktionen (20) mit teilweise offenen Seiten aufweist, wobei jede der genannten Tierunterstandskonstruktionen Folgendes aufweist:
einen Boden zum Tragen der Tiere, wobei der Boden (2) durch ihn verlaufende Öffnungen hat, die tierische Abfallstoffe durch den Boden (2) durchlassen,
eine Unterkellerung (3) unter dem genannten Boden (2) zum Sammeln der genannten Abfallstoffe und
eine wasserundurchlässige, gekrümmte und geschlossene Überdachung (22), die von Seitenstützen oberhalb und über dem Boden (2) getragen wird, wobei die genannte Überdachung (22) aus einem Material hergestellt ist, das wenigstens etwas Licht durchlässt, und
wobei jede genannte Tierunterstandskonstruktion (20) ferner ein Luftströmungsregelungsmittel zum Regeln der Luftströmung in dem Bereich unter der genannten Überdachung (22) aufweist, wobei das genannte Luftströmungsregelungsmittel Folgendes aufweist:
a) eine schließbare Belüftungsöffnung (202) in der genannten Überdachung (22) und
b) ein oder mehr sich nach unten und nach außen erstreckende Jalousiebretter (201), die sich unterhalb eines unteren Rands der Überdachung (22) befinden oder sich von ihr erstrecken,
und wobei jede genannte Tierunterstandskonstruktion einen Flüssigabfallkanal (208) hat, der mit der genannten Unterkellerung (3) einer jeweiligen Unterstandskonstruktion in Fluidverbindung ist, um das Abfließen von flüssigem Abfall in jeder Unterkellerung durch hydrostatische Kräfte zu einem abgesetzt befindlichen Flüssigabfallspeicherbehälter (209) zu ermöglichen, den alle genannten Konstruktionen gemeinsam nutzen.

2. Tierhaltungseinrichtung (50) nach Anspruch 1, wobei die genannte Fluidverbindung eine mit Ventil versehene Verbindung ist, die das Regulieren der Aufnahme von Fluid durch den genannten Flüssigabfallspeicherbehälter (209) ermöglicht.

3. Tierhaltungseinrichtung (50) nach Anspruch 1 oder 2, wobei der Einlass (212) für Fluid in den genannten Flüssigabfallspeicherbehälter (209) an oder nahe dem Boden des genannten Behälters ist.

4. Tierhaltungseinrichtung (50) nach einem der Ansprüche 1 bis 3, wobei der Flüssigkeitsspeicherbehälter (209) einen Auslasskanal (213) beinhaltet, über den Fluid aus dem genannten Flüssigkeitsspeicherbehälter gesaugt werden kann.

5. Tierhaltungseinrichtung (50) nach Anspruch 4, wobei der genannte Auslasskanal (213) eine Fluidverbindung mit dem genannten Flüssigkeitsspeicherbehälter an oder nahe an dem Boden des genannten Behälters herstellt.

6. Tierhaltungseinrichtung (50) nach einem der Ansprüche 1 bis 5, wobei der Flüssigspeicherbehälter (209) eine Fluidabdeckung (210) hat, die oben auf dem genannten Fluid schwimmt und Verdunstung von Fluid aus einem eingefassten Fluidkörper reduziert.

7. Tierhaltungseinrichtung (50) nach einem der Ansprüche 1 bis 6, wobei die genannte Einrichtung wenigstens zwei der genannten Tierunterstandskonstruktionen (20) umfasst, wobei die Unterkellerung (3) jeder der genannten Tierunterstandskonstruktionen (20) in einen separaten Zwischenbehälter (206) abläuft, wobei jeder der genannten Zwischenbehälter über den genannten Flüssigabfallkanal (208) mit dem genannten Flüssigabfallspeicherbehälter (209) in Fluidverbindung ist.

8. Verfahren zum Trennen von flüssigem Abfall von festem Abfall bei von einem Nutztier erzeugtem Abfall, wobei das genannte Verfahren Folgendes aufweist:
Bereitstellen einer Tierhaltungseinrichtung (50) nach einem der vorhergehenden Ansprüche und
Abfließenlassen von wenigstens einem Teil der genannten Flüssigkeit aus der genannten Unterkellerung (3) und in den genannten Flüssigkeitsspeicherbehälter (209) vor Entfernen des übrigen Abfalls aus der Unterkellerung (3).

## Revendications

1. Installation de gestion d'animaux (50) comportant une pluralité de structures d'abri pour animaux à côtés partiellement ouverts (20), chacune desdites structures d'abri pour animaux comportant :
un plancher servant de support pour les animaux, le plancher (2) comprenant des ouvertures au travers de celui-ci pour permettre aux déchets d'animaux de passer au travers du plancher (2),
un sous-sol (3) sous ledit plancher (2) servant à la collecte desdits déchets, et
un auvent (22) qui est imperméable à l'eau, courbe et fermé, supporté au-dessus du plancher (2) par des supports latéraux, ledit auvent (22) étant réalisé à partir d'un matériau qui permet à au moins une certaine quantité de lumière de passer au travers de celui-ci, et dans laquelle chaque dite structure d'abri pour animaux (20) comporte par ailleurs un moyen de régulation d'écoulement d'air servant à réguler l'écoulement d'air dans la zone sous ledit auvent (22), ledit moyen de régulation d'écoulement d'air comportant :
a) un orifice d'aération en mesure d'être fermé (202) au travers dudit auvent (22) et
b) une ou plusieurs persiennes (201) s'étendant vers le bas et vers l'extérieur situées sous un, ou s'étendant en provenance d'un, bord inférieur de l'auvent (22),
et dans laquelle chaque dite structure d'abri pour animaux comprend une conduite pour déchets liquides (208) en connexion fluidique avec ledit sous-sol (3) d'une structure d'abri respective pour permettre l'évacuation des déchets liquides dans chaque sous-sol jusqu'à un réservoir de stockage de déchets liquides situé à distance (209) commun pour toutes lesdites structures, par le biais de forces hydrostatiques.

2. Installation de gestion d'animaux (50) selon la revendication 1, dans laquelle ladite connexion fluidique est une connexion à valve permettant la commande de réception de fluide par ledit réservoir de stockage de déchets liquides (209).

3. Installation de gestion d'animaux (50) selon la revendication 1 ou la revendication 2, dans laquelle l'entrée (212) pour fluide jusque dans ledit réservoir de stockage de déchets liquides (209) se trouve au niveau du fond dudit réservoir ou à proximité de celui-ci.

4. Installation de gestion d'animaux (50) selon l'une quelconque des revendications 1 à 3, dans laquelle le réservoir de stockage de liquides (209) comprend une conduite de sortie (213) par le biais de laquelle du fluide peut être sorti par aspiration du réservoir de stockage de liquides.

5. Installation de gestion d'animaux (50) selon la revendication 4, dans laquelle ladite conduite de sortie (213) effectue une connexion fluidique avec ledit réservoir de stockage de liquides au niveau du fond dudit réservoir ou à proximité de celui-ci.

6. Installation de gestion d'animaux (50) selon l'une quelconque des revendications 1 à 5, dans laquelle le réservoir de stockage de liquides (209) comprend un couvercle de fluide (210) qui flotte sur ledit fluide et réduit toute évaporation de fluide en provenance d'un corps de fluide confiné.

7. Installation de gestion d'animaux (50) selon l'une quelconque des revendications 1 à 6, dans laquelle ladite installation comporte au moins deux desdites structures d'abri pour animaux (20), dans laquelle le sous-sol (3) de chacune desdites structures d'abri pour animaux (20) évacue vers un réservoir tampon séparé (206), chacun desdits réservoirs tampons étant en connexion fluidique avec ledit réservoir de stockage de déchets liquides (209) par le biais de ladite conduite de déchets liquides (208).

8. Procédé permettant de séparer les déchets liquides des déchets solides des déchets produits par un animal d'élevage, ledit procédé comportant les étapes consistant à :
mettre en oeuvre une installation de gestion d'animaux (50) selon l'une quelconque des revendications précédentes, et
permettre l'évacuation d'au moins une partie desdits liquides en provenance dudit sous-sol (3) et jusque dans ledit réservoir de stockage de liquides (209) avant l'élimination des déchets restants en provenance du sous-sol (3).
